Europäisches Patentamt

European Patent Office

Office européen des brevets

(19)

(11) **EP 1 375 544 A1**

(12) **EUROPEAN PATENT APPLICATION**
published in accordance with Art. 158(3) EPC

(43) Date of publication:
**02.01.2004 Bulletin 2004/01**

(51) Int Cl.⁷: **C08F 297/02**

(21) Application number: **02711215.0**

(22) Date of filing: **23.01.2002**

(86) International application number:
**PCT/JP2002/000459**

(87) International publication number:
**WO 2002/059173 (01.08.2002 Gazette 2002/31)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **25.01.2001 JP 2001016798**

(71) Applicants:
• **TEIJIN LIMITED**
  **Osaka-shi Osaka 541-0054 (JP)**
• **BAYER AG**
  **51368 Leverkusen (DE)**

(72) Inventors:
• **HASHIZUME, Kiyonari, c/o Teijin Limited**
  **Iwakuni-shi, Yamaguchi 740-0014 (JP)**
• **KIDO, Nobuaki, c/o Teijin Limited**
  **Iwakuni-shi, Yamaguchi 740-0014 (JP)**
• **MATSUMURA, Shunichi, c/o Teijin Limited**
  **Iwakuni-shi, Yamaguchi 740-0014 (JP)**
• **IWATA, Kaoru**
  **Hachioji-shi, Tokyo 192-0914 (JP)**
• **AOKI, Akihiro, c/o Teijin Limited**
  **Hino-shi, Tokyo 191-0065 (JP)**

(74) Representative: **Cockerton, Bruce Roger et al**
  **Carpmaels & Ransford,**
  **43 Bloomsbury Square**
  **London WC1A 2RA (GB)**

(54) **IMPROVED HYDROGENATED STYRENE/CONJUGATED DIENE/STYRENE BLOCK COPOLYMER AND PROCESS FOR PRODUCTION THEREOF**

(57)     The present invention relates to a hydrogenated styrene-conjugated diene-styrene copolymer having excellent toughness, heat distortion temperature, and moldability, a production process therefor, and an optical material, etc. employing the copolymer. The styrene-conjugated diene-styrene block copolymer of the present invention is a hydrogenated styrene-conjugated diene-styrene block copolymer obtained by hydrogenating a styrene-conjugated diene-styrene block copolymer comprising mainly styrene polymer blocks and a conjugated diene polymer block, wherein (A) the hydrogenated styrene polymer block/hydrogenated conjugated diene polymer block ratio by weight is 75/25 to 97/3, (B) the degree of hydrogenation is at least 90%, (C) the number-average molecular weight obtained by a GPC method is 30,000 to 200,000 g/mol, and (D) the hydrogenated styrene-conjugated diene-styrene block copolymer contains 1 to 20 wt % of a high molecular weight component having a molecular weight that is at least three times the number-average molecular weight obtained by the GPC method.

*FIG.1*

MOLECULAR WEIGHT (g/mol)

EP 1 375 544 A1

**Description**

Technical Field

The present invention relates to a hydrogenated styrene-conjugated diene-styrene copolymer, a production process therefor, and optical materials, etc. employing this copolymer. More particularly, it relates to a hydrogenated styrene-conjugated diene-styrene copolymer having excellent heat resistance, moldability, transparency, optical isotropy, dimensional stability (low water absorption) and/or mechanical properties, and optical materials, etc. mainly comprising such a polymer.

Background Art

Plastics that are used for optical materials such as optical disks, optical lenses, and liquid crystal display substrates are required to have various properties such as optical isotropy (low birefringence), dimensional stability, light resistance, weather resistance and thermal stability in addition to transparency. Conventionally, polycarbonate or poly(methyl methacrylate) has been used for such transparent plastics. However, there are the problems that, since polycarbonate has aromatic rings in its molecule, its intrinsic birefringence is high and its moldings tend to have optical anisotropy, and since poly(methyl methacrylate) has extremely high water absorption, its dimensional stability is poor and its physical heat resistance is also low.

Although current optical disk substrates predominately employ polycarbonate, its high birefringence and distortion of disks due to moisture absorption have been an increasing concern in recent years with an increase in the capacity of magneto-optical recording disks (MODs) and advances in high recording density, represented by the development of the digital versatile disk (DVD) and blue lasers.

Under such circumstances, amorphous polyolefin based resins have been intensively developed in recent years as alternative materials to polycarbonate. As one example thereof, a hydrogenated polystyrene having a polyvinylcyclohexane structure formed by hydrogenating the aromatic rings of polystyrene, and a copolymer of the hydrogenated polystyrene have been proposed. For example, JP-B-7-114030 (JP-B denotes a Japanese examined patent application publication) discloses optical disks having a substrate comprising a hydrogenated polystyrene having a vinylcyclohexane content of at least 80 wt %.

Such a resin has the advantage that it has high light transmittance, and its birefringence and water absorption are very low in comparison with polycarbonate, but it has the defect that it is mechanically brittle. As examples of attempts to overcome the defect of this kind of resin, cases in which the hydrogenated product of a styrene-conjugated diene block copolymer formed by subjecting styrene to block copolymerization with a conjugated diene such as isoprene or butadiene, that is, incorporating a rubber component into styrene, is used as a material for optical purposes including optical disk substrates have been disclosed in Japanese Patent Nos. 2668945 and 2730053.

Such incorporation of a rubber component can improve the mechanical brittleness to some extent, but it results in a new concern about a decrease in the heat distortion temperature.

Optical disks are often subjected to a thermal load during a process for their production or during actual use. For example, in a process for the production of, in particular, record-playback only optical disks called the write-once type, record-playback-erase-rerecord optical disks called the erasable type, etc., it is necessary to form several layers of films from a metal oxide, an alloy compound, etc. on a substrate by sputtering at high temperature and high vacuum, and there is a possibility that, if a resin having low heat resistance is used, the entire substrate might be distorted. Furthermore, during operations such as recording, playback, erasing, and rerecording of an optical disk, since the temperature of a recording film exceeds 200°C due to high energy laser irradiation, it can be expected that the temperature of the substrate will also become considerably high, and there is a possibility that pits, lands, and grooves might be distorted. Moreover, in the case where optical disks are used in vehicles, there are occasions when they are left at about 100°C for a long period of time, and there is a possibility that the entire substrate or pits, lands, and grooves might be distorted.

The above-mentioned concerns cannot be overcome by the conventional hydrogenated product of the styrene-conjugated diene block copolymer, and there has been a desire for the development of a resin having, as its main characteristics, excellent toughness and heat distortion temperature.

Disclosure of Invention

As is clear from the conventional technology, an object of the present invention is to provide a hydrogenated styrene-conjugated diene-styrene block copolymer having excellent toughness, heat distortion temperature, and moldability. Another object of the present invention is to provide a process for producing the hydrogenated styrene-conjugated diene-styrene block copolymer. Yet another object of the present invention is to provide a molding material comprising a hydrogenated styrene-conjugated diene-styrene block copolymer composition containing the hydrogenated styrene-conjugated diene-styrene block copolymer, and an optical material formed from the molding material.

While overcoming the above-mentioned problems, the present inventors have focused attention on the effect of the molecular weight distribution of the hydrogenated styrene-conjugated diene block copolymer on various physical properties. As an index of the molecular weight distribution, the ratio Mw/Mn of the weight-average molecular weight (Mw) to the number-average molecular weight (Mn) obtained by a gel permeation chromatography (GPC) method is usually used. With regard to hydrogenated styrene polymers, it is possible to synthesize a polymer having a molecular weight distribution (Mw/Mn) of on the order of 1 to 2 by methods described below.

(1) A method in which the molecular weight distribution of the hydrogenated styrene polymer is broadened compared with that of the styrene polymer by utilizing a molecular chain cleavage reaction that occasionally accompanies styrene polymer hydrogenation (International publication WO 00/34340, etc.).
(2) A method in which the polymerization method for the starting styrene polymer is changed so as to change the molecular weight distribution of the styrene polymer, and the styrene polymer is then hydrogenated (US Pat. No. 5,612,422, etc.). Specifically, for example, when an anionic polymerization technique is employed using as an initiator an anionic polymerization initiator, a styrene polymer having very narrow distribution (Mw/Mn approximately 1.1) can be synthesized, and when a radical polymerization technique is employed, a polymer having a broad distribution (Mw/Mn approximately 2.0) can be synthesized. Hydrogenating these polymers by a method that is not accompanied by a molecular chain cleavage reaction allows these molecular weight distributions to be maintained in the hydrogenated polymer so synthesized.

However, the synthesis of hydrogenated styrene-conjugated diene block copolymers having large variations in the molecular weight distribution has not been possible. Specifically, when the above-mentioned method (1) is employed, although it is possible to synthesize copolymers having varied molecular weight distributions, since molecular chain cleavage reactions occur at random positions, a hydrogenated styrene polymer, a hydrogenated conjugated diene polymer, etc. are consequently formed in addition to the hydrogenated styrene-conjugated diene block copolymer. In particular, if the hydrogenated conjugated diene polymer is included, the transparency is degraded, and use as an optical material is impossible. With regard to the above-mentioned method (2), at present it is only anionic polymerization that can desirably synthesize a styrene-conjugated diene block copolymer, and as a result the molecular weight distribution could only be varied in an extremely narrow Mw/Mn region of 1.0 to 1.3.

As a result of an intensive investigation, taking into consideration the above-mentioned conventional technology, it has been found that when a styrene-conjugated diene block polymer is synthesized using, for example, continuous stirred tank reactors connected in series, polymers having large differences in their molecular weight distribution can be synthesized. Furthermore, as a result of examining hydrogenated styrene-conjugated diene block polymers obtained by hydrogenating the above polymers, with respect to a correlation between various physical properties and aspects of the chemical constitution such as the copolymerization ratio and the molecular weight distribution, it has been found that a hydrogenated styrene-conjugated diene-styrene block copolymer having a characteristic molecular weight distribution that tails toward the high molecular weight side is a resin having excellent toughness, heat distortion temperature and moldability, and having improved mechanical properties. Moreover, it has been found that such a hydrogenated copolymer can be suitably used as an optical material, including an optical disk substrate, and the present invention has thus been accomplished.

That is, the present invention relates to a hydrogenated styrene-conjugated diene-styrene block copolymer obtained by hydrogenating a styrene-conjugated diene-styrene block copolymer comprising mainly styrene polymer blocks and a conjugated diene polymer block, wherein (A) the hydrogenated styrene polymer block/hydrogenated conjugated diene polymer block ratio by weight is 75/25 to 97/3, (B) the degree of hydrogenation is at least 90%, (C) the number-average molecular weight (Mn) obtained by a gel permeation chromatography (GPC) method is 30,000 to 200,000 g/mol, and (D) the hydrogenated styrene-conjugated diene-styrene block copolymer, contains 1 to 20 wt % of a high molecular weight component having a molecular weight that is at least three times the number-average molecular weight (Mn) obtained by the GPC method.

Furthermore, the present invention relates to a process for producing a hydrogenated styrene-conjugated diene-styrene copolymer, the process comprising a step of continuously synthesizing a styrene-conjugated diene-styrene block copolymer using a continuous stirred tank reactor, and a step of hydrogenating the copolymer.

Moreover, the present invention relates to a molding material comprising mainly the hydrogenated styrene-conjugated diene-styrene block copolymer or a hydrogenated styrene-conjugated diene-styrene block copolymer composition containing the hydrogenated styrene-conjugated diene-styrene block copolymer.

Furthermore, the present invention relates to an optical material comprising the molding material.

Moreover, the present invention relates to an optical disk substrate comprising the molding material.

Preferred Modes for Carrying Out the Invention

The present invention is described in detail below.

(Styrene-conjugated diene-styrene block copolymer)

The styrene-conjugated diene-styrene block copolymer according to the present invention is a block copolymer comprising mainly styrene polymer blocks and a conjugated diene polymer block, the conjugated diene polymer block being sandwiched by the styrene polymer blocks.

Examples of the conjugated diene include cyclic conjugated dienes such as 1,3-cyclopentadiene, 1,3-cyclohexadiene, 1,3-cycloheptadiene, 1,3-cyclooctadiene and derivatives thereof, and linear conjugated dienes such as isoprene, 1,3-butadiene, 1,3-pentadiene, 1,3-hexadiene, and 2,3-dimethyl-1,3-butadiene. Thereamong, isoprene and butadiene are preferable from the viewpoint of high reactivity and ease of availability, and isoprene is more preferable. These conjugated dienes may be used singly or in a combination of two or more types.

The styrene polymer block and the conjugated diene polymer block comprise mainly a styrene-derived unit and a conjugated diene-derived unit respectively, but the respective polymer blocks may have randomly introduced thereinto the conjugated diene-derived unit or the styrene-derived unit in an amount of on the order of about 5 wt % or less of the corresponding polymer block. Furthermore, as components other than styrene and the conjugated diene, a styrenic monomer such as $o$-methyl styrene, $m$-methyl styrene, $p$-methyl styrene, $\alpha$-methyl styrene, vinylnaphthalene, or $\alpha$-methylvinylnaphthalene may be incorporated in an amount of on the order of 10 wt % or less of the entire copolymer. The styrenic monomers may be used singly or in a combination of two or more types.

When a monomer other than styrene is used in combination in the present invention, definitions of the ratio by weight, etc. of the blocks or the hydrogenated styrene polymer blocks of the present invention should apply to the total of the styrenes.

The ratio by weight (styrene polymer block)/(conjugated diene polymer block) of the styrene-conjugated diene-styrene block copolymer of the present invention is preferably 74/26 to 97/3. By hydrogenating the copolymer of this range, it is possible for the hydrogenated copolymer to achieve a ratio by weight (hydrogenated styrene polymer block) /(hydrogenated conjugated diene polymer block) of 75/25 to 97/3.

The styrene-conjugated diene-styrene block copolymer according to the present invention comprises mainly a styrene-conjugated diene-styrene triblock copolymer. The styrene-conjugated diene-styrene block copolymer may contain a styrene-conjugated diene diblock copolymer and/or a styrene polymer, and the content thereof is preferably 0 to 20 wt %. The content is more preferably 15 wt % or less, yet more preferably 10 wt % or less, and most preferably 5 wt % or less.

The number-average molecular weight of the styrene-conjugated diene-styrene block copolymer according to the present invention is in the range of 40,000 to 300,000 g/mol as a molecular weight obtained by a GPC method on a polystyrene basis, preferably 50,000 to 250,000 g/mol, and more preferably 60,000 to 200,000 g/mol. If the number-average molecular weight is larger than the above range, then it is difficult for the hydrogenation reaction to proceed, and the melt viscosity of the hydrogenated copolymer becomes too high, making melt-molding difficult, which is undesirable. If it is less than the above range, although the hydrogenation reaction becomes easy and the melt viscosity of the hydrogenated copolymer is lowered, the toughness is undesirably degraded.

The reduced viscosity measured in dilute solution is also an important index for estimating molecular weight. In the present invention, it is expressed as a reduced viscosity ηsp/c measured in a 0.5 g/dL toluene solution at 30°C, and the reduced viscosity is preferably in the range of 0.1 to 5 dL/g, and more preferably 0.2 to 2 dL/g.

The styrene-conjugated diene-styrene block copolymer according to the present invention preferably contains 1 to 20 wt % of a component having a high molecular weight that is at least three times the number-average molecular weight (Mn) obtained by the GPC method, more preferably 3% to 18%, and yet more preferably 4% to 15%. With regard to the molecular weight distribution, a value for the ratio Mw/Mn of the weight-average molecular weight (Mw) obtained by the GPC method to Mn is preferably 1.3 to 2.2, more preferably 1.4 to 1.8, and yet more preferably 1.4 to 1.7. A value for the ratio Mz/Mw of the z-average molecular weight (Mz) obtained by the GPC method to Mw is preferably 1.1 to 2.5, more preferably 1.2 to 2.0, and yet more preferably 1.3 to 1.6. If the amount of high molecular weight component is less than the above range or the molecular weight distribution is less than the above range, then the toughness of the hydrogenated polymer is undesirably degraded. If the amount of high molecular weight component is more than the above range or the molecular weight distribution is larger than the above range, then it is difficult to synthesize such a hydrogenated copolymer of the present invention and, moreover, the heat distortion temperature of a molding of the hydrogenated copolymer is undesirably degraded.

Molecular weights obtained by the GPC method in the present description are all molecular weights on a polystyrene basis and are obtained based on a value measured at 40°C using tetrahydrofuran as a developing solvent. These conditions are generally employed for measurement of a molecular weight by the GPC method. The number-average molecular weight (Mn), the weight-average molecular weight (Mw), and the z-average molecular weight (Mz) are molecular weights represented by the following equations.

$$Mn = \{\sum (Mi \times Ni)\}/(\sum Ni)$$

$$Mw = \{\sum (Mi^2 \times Ni)\}/\{\sum (Mi \times Ni)\}$$

$$Mz = \{\sum (Mi^3 \times Ni)\}/\{\sum (Mi^2 \times Ni)\}$$

In the equations, Mi is the molecular weight of component i, and Ni is the number of component i. Mw/Mn is an index of the degree of spread of the molecular weight distribution, and Mz/Mw is an index of the molecular weight distribution in which the contribution of a high molecular weight component is emphasized.

(Hydrogenated styrene-conjugated diene-styrene block copolymer)

The hydrogenated styrene-conjugated diene-styrene block copolymer according to the present invention is a polymer obtained by hydrogenating the styrene-conjugated diene-styrene block copolymer to at least 90%. The degree of hydrogenation is preferably at least 95%, more preferably at least 98%, and yet more preferably at least 99%. If it is less than the above range, then there are too many unsaturated bonds, and the transparency is undesirably degraded. The degree of hydrogenation referred to here means the degree of hydrogenation with respect to the total number of moles obtained by combining the number of moles of conjugated diene-derived double bonds in the copolymer and the number of moles of double bonds equivalent to the number of moles of aromatic rings. For example, an unhydrogenated styrene-derived aromatic ring is calculated as 3 moles of double bonds. The conjugated diene-derived double bonds are generally much more susceptible to hydrogenation than the aromatic rings, and in the present invention they are almost completely hydrogenated. On the other hand, when the aromatic rings are unhydrogenated, most thereof remain as aromatic rings, but there are a few cases in which the aromatic rings are partially hydrogenated to form a double bond.

The (hydrogenated styrene polymer block)/(hydrogenated conjugated diene polymer block) ratio by weight in the hydrogenated styrene-conjugated diene-styrene block copolymer according to the present invention is preferably 75/25 to 97/3 as described above.

The number-average molecular weight (Mn) of the hydrogenated styrene-conjugated diene-styrene block copolymer according to the present invention is in the range of 30,000 to 200,000 g/mol as a molecular weight obtained by a gel permeation chromatography (GPC) method on a polystyrene basis, preferably 50,000 to 180,000 g/mol, and more preferably 60,000 to 160,000 g/mol. If the number-average molecular weight is larger than the above range, then it is difficult for the hydrogenation reaction to proceed, and the melt viscosity of the hydrogenated copolymer becomes too high, making melt molding difficult, which is undesirable. If it is less than the above range, although the hydrogenation reaction becomes easy and the melt viscosity of the hydrogenated copolymer is lowered, the toughness is undesirably degraded.

The reduced viscosity measured in dilute solution is also an important index for estimating molecular weight. In the present invention, it is expressed as a reduced viscosity ηsp/c measured in a 0.5 g/dL toluene solution at 30°C, and the reduced viscosity is preferably 0.1 to 5 dL/g, and more preferably 0.2 to 2 dL/g.

The hydrogenated styrene-conjugated diene-styrene block copolymer according to the present invention contains 1 to 20% of a high molecular weight component having a molecular weight that is at least three times the number-average molecular weight (Mn) obtained by the GPC method, preferably 3% to 18%, and more preferably 4% to 15%. If the amount of high molecular weight component is less than the above range, then the heat distortion temperature undesirably decreases or the toughness is undesirably degraded. If it exceeds the above range, it is difficult to synthesize such a hydrogenated copolymer of the present invention and, moreover, the moldability is markedly degraded, which is undesirable.

With regard to the molecular weight distribution of the hydrogenated styrene-conjugated diene-styrene block copolymer, a value for the ratio Mw/Mn of the weight-average molecular weight (Mw) obtained by the GPC method to Mn is preferably 1.3 to 2.2, more preferably 1.4 to 1.8, and yet more preferably 1.4 to 1.7. A value for the ratio Mz/Mw of the z-average molecular weight (Mz) similarly obtained by the GPC method to Mw is preferably 1.1 to 2.5, more preferably 1.2 to 2.0, and yet more preferably 1.3 to 1.6.

In the present invention, with regard to a molecular weight distribution curve, obtained by the GPC method, of the hydrogenated styrene-conjugated diene-styrene block copolymer, the distribution curve in a region where the molecular weight is at a peak or larger than the peak is preferably substantially within a region represented by Equation (1) below.

$$f(x) = H \exp\left[\frac{-\ln(2)}{(\ln\rho)^2}\left(\ln\left[\frac{(x - x_0)(\rho^2 - 1)}{w\rho} + 1\right]\right)^2\right] \quad (x \geq x_0) \qquad (1)$$

(In the Equation, x denotes molecular weight, $x_0$ denotes molecular weight at the peak of the molecular weight distribution curve obtained by the GPC method, H denotes height at $x_0$ in the molecular weight distribution curve obtained by the GPC method, and w and $\rho$ satisfy $1.3 \leq w/x_0 \leq 3.0$ and $1.5 \leq \rho \leq 3.0$ respectively.)

The ranges for $w/x_0$ and $\rho$ are more preferably $1.5 \leq w/x_0 \leq 2.5$ and $1.6 \leq \rho \leq 2.5$. When the molecular weight distribution curve obtained by the GPC method falls outside the range represented by Equation (1), the toughness is degraded or the melt viscosity is increased, and the moldability is degraded, which is undesirable.

A hydrogenated copolymer having a molecular weight distribution that tails to some extent on the high molecular weight side as represented by Equation (1) has a high heat distortion temperature, high toughness, and excellent moldability, and is therefore preferable.

As hereinbefore described, even if the amount of high molecular weight component contained in the hydrogenated styrene-conjugated diene-styrene block copolymer is small, it can contribute to improvements in the toughness and the heat distortion temperature, and as long as it is within the above range, there is small effect on the melt viscosity of the copolymer, and the moldability is not greatly affected.

The hydrogenated styrene-conjugated diene-styrene block copolymer according to the present invention comprises mainly a hydrogenated styrene-conjugated diene-styrene triblock copolymer. The hydrogenated styrene-conjugated diene-styrene block copolymer may contain a hydrogenated styrene-conjugated diene diblock copolymer and/or a hydrogenated styrene polymer, and the content thereof is preferably 0 to 20 wt %. The content thereof is more preferably at most 15 wt %, yet more preferably at most 10 wt %, and most preferably at most 5 wt %. That is, the content of the hydrogenated styrene-conjugated diene-styrene triblock copolymer in the hydrogenated styrene-conjugated diene-styrene block copolymer is preferably at least 85 wt %, more preferably at least 90 wt %, and most preferably at least 95 wt %. If the content of the hydrogenated styrene-conjugated diene diblock copolymer and/or the hydrogenated styrene polymer exceeds the above range, then the toughness and the transparency are undesirably degraded. The number-average molecular weight of the hydrogenated styrene-conjugated diene binary copolymer and the hydrogenated styrene polymer contained therein is not particularly limited, but it is preferably 1,000 to 200,000 g/mol, more preferably 2,000 to 180,000 g/mol, and yet more preferably 3,000 to 160,000g/mol.

(Process for producing hydrogenated styrene-conjugated diene-styrene block copolymer)

The hydrogenated styrene-conjugated diene-styrene block copolymer according to the present invention is suitably produced via a step of continuously synthesizing a styrene-conjugated diene-styrene block copolymer using a continuous stirred tank reactor, and a step of hydrogenating the copolymer. More preferably, it is produced via the following steps (I) to (IV), that is, step (I) in which a solution of styrene and an anionic polymerization initiator is continuously supplied to a first continuous stirred tank reactor and the styrene is continuously polymerized, step (II) in which the reaction mixture obtained in step (I) and a conjugated diene are continuously supplied to a second continuous stirred tank reactor and the conjugated diene is continuously block-copolymerized, step (III) in which the reaction mixture obtained in step (II) and styrene are continuously supplied to a third continuous stirred tank reactor and the styrene is continuously block-copolymerized, and step (IV) in which a hydrogenation catalyst is added to the reaction mixture obtained in step (III) and a hydrogenation reaction is carried out.

Furthermore, in steps (I) to (III), all of Expressions (a) to (g) below are preferably satisfied.

(a) $1 \leq V_1/v_1 \leq 500$
(b) $1 \leq V_2/(v_1 + v_2) \leq 500$
(c) $1 \leq V_3/(v_1 + v_2 + v_3) \leq 500$
(d) $0.01 \leq C_{S1} \leq 9$
(e) $0.01 \leq C_I \leq 10$

(f) $0.01 \le C_{S3} \le 9$
(g) $2 \times 10^2 \le (C_{S1}v_1 + C_Iv_2 + C_{S3}v_3)/C_Bv_1 \le 2 \times 10^4$

(In the Expressions, V, is the volume (L) of the reaction mixture in the first continuous stirred tank reactor, $v_1$ is the rate of supply (L/min) of the total amount of styrene, the anionic polymerization initiator, and a solvent added as necessary, which are supplied to the first continuous stirred tank reactor, $V_2$ is the volume (L) of the reaction mixture in the second continuous stirred tank reactor, $v_2$ is the rate of supply (L/min) of the total amount of the conjugated diene and a solvent added as necessary, which are supplied to the second continuous stirred tank reactor, $V_3$ is the volume (L) of the reaction mixture in the third continuous stirred tank reactor, $v_3$ is the rate of supply (L/min) of the total amount of styrene and a solvent added as necessary, which are supplied to the third continuous stirred tank reactor, $C_{S1}$ is the concentration (mol/L) of styrene supplied to the first continuous stirred tank reactor, $C_I$ is the concentration (mol/L) of the conjugated diene supplied to the second continuous stirred tank reactor, $C_{S3}$ is the concentration (mol/L) of styrene supplied to the third continuous stirred tank reactor, and $C_B$ is the concentration (mol/L) of the anionic polymerization initiator supplied to the first continuous stirred tank reactor.) Furthermore, it is preferable that $V_1 = V_2 = V_3$. Moreover, it is preferable for steps (I) to (III) to be carried out at 30°C to 100°C.

The steps (I) to (IV) are explained below.

In step (I), the solution of styrene and the anionic polymerization initiator is continuously added to the first continuous stirred tank reactor. The solution added to the continuous stirred tank reactor is uniformly mixed with the solution already present in the continuous stirred tank reactor. Examples of the anionic polymerization initiator include metals of groups I to II of the periodic table and organometallic compounds thereof.

Specific examples thereof include alkali metals such as lithium, sodium, potassium, rubidium, cesium, and francium, alkaline earth metals such as magnesium, calcium, strontium, barium, and radium, organolithium compounds such as methyllithium, ethyllithium, *n*-propyllithium, *iso*-propyllithium, *n*-butyllithium, *iso*-butyllithium, *sec*-butyllithium, *t*-butyllithium cyclopentadienyllithium, phenyllithium, and cyclohexyllithium, organosodium compounds such as methylsodium, ethylsodium, *n*-propylsodium, *iso*-propylsodium, *n*-butylsodium, and cyclopentadienylsodium, and organoalkaline earth metal compounds such as dimethylmagnesium, bis(cyclopentadienyl)magnesium, dimethylcalcium, and bis(cyclopentadienyl)calcium. Among these examples, the organolithium compounds are preferred in terms of availability and ease of handling, and *n*-butyllithium and *sec*-butyllithium are particularly preferred. They can be used singly or in a combination of two or more types. Among them, when *n*-butyllithium is used, since formation of styryllithium by a reaction between styrene and *n*-butyllithium (a so-called initiation reaction) is slower than an anionic polymerization reaction of styrene (a so-called growth reaction), a polymer having a broad molecular weight distribution is obtained. In contrast, when *sec*-butyllithium is used, since the initiation reaction is much faster than the growth reaction, a polymer having a narrow molecular weight distribution is obtained. That is, with regard to the styrene-conjugated diene-styrene block copolymer, in order to make the content of the styrene-conjugated diene-styrene triblock copolymer at least 85 wt %, it is preferable to use an anionic polymerization initiator, such as *sec*-butyllithium, that can make the initiation reaction fast.

During this stage, an electron-donating compound can be added in order to further activate the above-mentioned initiator, thus increasing the reaction rate and the molecular weight and preventing deactivation of anions. The electron-donating compound is a compound that can donate an electron to the metal of the initiator without impairing the function of the initiator, and is a compound containing an oxygen atom, a nitrogen atom, a sulfur atom, or a phosphorus atom. Specific examples thereof include ethers such as furan, tetrahydrofuran, diethyl ether, anisole, diphenyl ether, methyl *t*-butyl ether, dioxane, dioxolane, dimethoxyethane, and diethoxyethane; tertiary amines such as trimethylamine, triethylamine, tributylamine, tetramethylmethylenediamine, tetramethylethylenediamine, tetraethylmethylenediamine, tetraethylethylenediamine, tetramethyl-1,3-propanediamine, tetramethylphenylenediamine, and diazabicyclo[2,2,2]octane; thioethers such as dimethylsulfide, thiophene, and tetrahydrothiophene; tertiary phosphines such as trimethylphosphine, triethylphosphine, tri-*n*-butylphosphine, triphenylphosphine, dimethylphosphinomethane, dimethylphosphinoethane, dimethylphosphinopropane, diphenylphosphinomethane, diphenylphosphinoethane, and diphenylphosphinopropane; and metal alkoxides such as sodium *t*-butoxide, sodium phenoxide, potassium *t*-butoxide, and potassium phenoxide. Among these compounds, tetrahydrofuran, dimethoxyethane, tetramethylethylenediamine, and diazabicyclo[2,2,2]octane can be cited as particularly preferred examples. They can be used singly or in a combination of two or more types. In the present invention, an electron-donating compound containing no phosphorus atom is preferably used.

Although the amount of electron-donating compound added depends on the type of initiator and the type of electron-donating compound, it is 0.1 to 100 mol relative to 1 mol of the initiator, preferably 0.2 to 50 mol, and more preferably 0.3 to 10 mol. When the amount thereof added is too small, the activation effect cannot be obtained, and when the amount thereof added is too large, the electron-donating compound is only wasted, without enhancing the activation effect. However, when the electron-donating compound is used as a solvent, this does not always apply.

The styrene and the anionic polymerization initiator added to the first continuous stirred tank reactor are preferably added as a solution. The solvent used here is not particularly limited as long as it can dissolve the polymer and does interfere with the reaction between styrene and the anionic polymerization initiator, and preferred examples thereof include C4-12 aliphatic hydrocarbons such as butane, *n*-pentane, *n*-hexane, and *n*-heptane; C4-12 alicyclic hydrocarbons such as cyclobutane, cyclopentane, methylcyclopentane, cyclohexane, methylcyclohexane, cycloheptane, cyclooctane, and decalin; C6-12 aromatic hydrocarbons such as benzene, toluene, xylene, mesitylene, ethylbenzene, diethylbenzene, cumene, tetralin, and naphthalene; and C4-12 ethers such as diethyl ether, tetrahydrofuran, and methyl *t*-butyl ether. Among these solvents, the aliphatic hydrocarbons, the alicyclic hydrocarbons, and the ethers are preferred, and cyclohexane, methylcyclohexane, and methyl *t*-butyl ether are particularly preferred. Since during polymerization the active ends can be very susceptible to water, oxygen, etc., the polymerization is preferably carried out under an atmosphere of an inert gas such as nitrogen or argon or under liquid-tight conditions while sufficiently removing water from the reagents, the solvent, and the inert gas. Specifically, the amount of water contained in the reagents and the solvent is preferably at most 100 ppm, more preferably at most 50 ppm, and yet more preferably at most 20 ppm.

The rate of addition $v_1$ (L/min) of the solution (sum total of styrene, anionic polymerization initiator, and solvent) added to the first continuous stirred tank reactor preferably satisfies Expression (a) below.

$$1 \le V_1/v_1 \le 500 \tag{a}$$

(Here, V, is the volume (L) of the reaction mixture in the first continuous stirred tank reactor, and $v_1$ is the rate of supply (L/min) of the total amount of styrene, the anionic polymerization initiator, and the solvent added as necessary, which are supplied to the first continuous stirred tank reactor.) $V_1/v_1$ in Expression (a) means the average residence time (min) of the reaction mixture in the first continuous stirred tank reactor. When $V_1/v_1$ is less than 1, the residence time is short compared to the polymerization reaction, and the efficiency of conversion of styrene into a polymer in the first continuous stirred tank reactor is undesirably low. If it is larger than 500, although the conversion efficiency is very high, the productivity is undesirably low. A more preferred range is $20 \le V_1/v_1 \le 400$.

The concentration of styrene ($C_{S1}$ (mol/L)) added to the first continuous stirred tank reactor preferably satisfies Expression (d) below.

$$0.01 \le C_{S1} \le 9 \tag{d}$$

If it is less than 0.01, then the productivity remains low, and if it is higher than 9, then the viscosity of the reaction mixture is too high, or it is difficult to control the temperature because of heat generated during the polymerization reaction, which is undesirable. The concentration of the anionic polymerization initiator ($C_B$ (mol/L)) preferably satisfies Expression (g) below.

$$2 \times 10^2 \le (C_{S1}v_1 + C_{I}v_2 + C_{S3}v_3)/C_B v_1 \le 2 \times 10^4 \tag{g}$$

(Here, $v_1$ and $C_{S1}$ have the same meanings as defined for Expressions (a) and (d), $v_2$ is the rate of supply (L/min) of the total amount of the conjugated diene and the solvent added as necessary, which are supplied to the second continuous stirred tank reactor, $v_3$ is the rate of supply (L/min) of the total amount of styrene and the solvent added as necessary, which are supplied to the third continuous stirred tank reactor, $C_I$ is the concentration (mol/L) of the conjugated diene supplied to the second continuous stirred tank reactor, $C_{S3}$ is the concentration (mol/L) of styrene supplied to the third continuous stirred tank reactor, and $C_B$ is the concentration (mol/L) of the anionic polymerization initiator supplied to the first continuous stirred tank reactor.)

The molecular weight of the styrene polymer in the first continuous stirred tank reactor is defined to some extent by the value of $(C_{S1}v_1 + C_{I}v_2 + C_{S3}v_3)/C_B v_1$. If this value is less than $2 \times 10^2$, then the molecular weight is too small, and the final polymer obtained does not have a practical strength, and if it is larger than $2 \times 10^4$, a polymer having good moldability cannot be obtained, which are undesirable.

In this way, in step (I), a reaction mixture containing a styrene polymer block whose end is anionized is obtained by a reaction between styrene and the anionic polymerization initiator in the first continuous stirred tank reactor, and this reaction mixture is added to the second continuous stirred tank reactor at substantially the same rate as that at which the solution is added.

In step (II), the reaction mixture obtained in step (I) and the conjugated diene are continuously supplied to the second continuous stirred tank reactor, thus continuously block-copolymerizing the conjugated diene. The conjugated diene can be added as it is or as a solution. With regard to a solvent used when it is added as a solution, the solvents cited above as examples in step (I) can be used, and it is preferable to use the same solvent as that used in step (I).

The rate of addition $v_2$ (L/min) of the conjugated diene or the conjugated diene solution added to the second continuous stirred tank reactor in step (II) preferably satisfies Expression (b) below.

$$1 \leq V_2/(v_1 + v_2) \leq 500 \qquad (b)$$

(Here, $V_2$ is the volume of the reaction mixture in the second continuous stirred tank reactor, and $v_1$ and $v_2$ have the same meanings as defined for Expression (g).) In the second continuous stirred tank reactor, since the reaction mixture obtained in step (I) is supplied at a rate of substantially $v_1$, and the conjugated diene or the conjugated diene solution is supplied at a rate of $v_2$, $V_2/(v_1 + v_2)$ means the average residence time (min) of the reaction mixture in the second continuous stirred tank reactor. If $V_2/(v_1 + v_2)$ is less than 1, then the residence time is short compared to the polymerization reaction, and the efficiency of conversion of the conjugated diene into a polymer in the second continuous stirred tank reactor is low, which is undesirable. If it is larger than 500, although the conversion efficiency is very high, the productivity is low, which is undesirable. A more preferred range is $20 \leq V_2/(v_1 + v_2) \leq 400$.

The concentration ($C_I$ (mol/L)) of the conjugated diene added to the second continuous stirred tank reactor preferably satisfies Expression (e) below.

$$0.1 \leq C_I \leq 10 \qquad (e)$$

When $C_I$ is less than 0.1, the productivity undesirably remains low.

In step (II), the conjugated diene forms a conjugated diene polymer block using as an initiator the anionized styrene polymer block contained in the reaction mixture supplied from step (I), and finally forms a styrene-conjugated diene diblock copolymer whose end is anionized. When unreacted anionic polymerization initiator is present in the reaction mixture supplied from step (I), the anionic polymerization initiator is also used as an initiator to make the polymerization reaction of the conjugated diene proceed. As a result, a conjugated diene polymer having its end anionized is formed. The reaction mixture thus formed in the second continuous stirred tank reactor is added to the third continuous stirred tank reactor at substantially the same rate as the rate ($v_1 + v_2$) at which the solution is added.

In step (III), the reaction mixture obtained in step (II) and styrene are continuously supplied to the third continuous stirred tank reactor, thus continuously block-copolymerizing the styrene. Styrene may be added as it is or as a solution. With regard to a solvent used when it is added as a solution, the solvents cited above as examples in step (I) can be used, and it is preferable to use the same solvent as that used in step (I).

In step (III), the rate of addition $v_3$ (L/min) of styrene or the styrene solution added to the second continuous stirred tank reactor preferably satisfies Expression (c) below.

$$1 \leq V_3/(v_1 + v_2 + v_3) \leq 500 \qquad (c)$$

(Here, $V_3$ (L) is the volume of the reaction mixture in the third continuous stirred tank reactor, and $v_1$, $v_2$, and $v_3$ have the same meanings as defined for Expression (g).) In the third continuous stirred tank reactor, since the reaction mixture obtained in step (II) is supplied at a rate of substantially $v_1 + v_2$, and styrene or the styrene solution is supplied at a rate of $v_3$, $V_3/(v_1 + v_2 + v_3)$ means the average residence time (min) of the reaction mixture in the third continuous stirred tank reactor. If $V_3/(v_1 + v_2 + v_3)$ is less than 1, then the residence time is short compared to the polymerization reaction, and the efficiency of conversion of styrene into a polymer in the third continuous stirred tank reactor is undesirably low. If it is larger than 500, although the conversion efficiency is very high, the productivity is undesirably degraded. A more preferred range is $20 \leq V_3/(v_1 + v_2 + v_3) \leq 400$.

The concentration ($C_{S3}$ (mol/L)) of styrene added to the second continuous stirred tank reactor preferably satisfies Expression (f) below.

$$0.01 \leq C_{S3} \leq 9 \qquad (f)$$

If $C_{S3}$ is less than 0.01, the productivity remains low, which is undesirable.

The styrene supplied in step (III) is polymerized to form a styrene polymer block using as an initiator the anionized styrene-conjugated diene diblock copolymer contained in the reaction mixture supplied from step (II), and finally forms a styrene-conjugated diene-styrene block copolymer whose end is anionized. Furthermore, when the conjugated diene polymer with its end anionized or unreacted anionic polymerization initiator is contained in the reaction mixture supplied from step (II), they can function as an initiator to make the polymerization reaction of styrene proceed. As a result, a conjugated diene-styrene diblock copolymer whose end is anionized and a styrene polymer are formed. The reaction mixture formed in the third continuous stirred tank reactor is thus discharged from the third continuous stirred tank reactor at substantially the same rate as the rate ($v_1 + v_2 + v_3$) at which the solution is added.

The reaction mixture discharged from the third continuous stirred tank reactor is preferably made to contact a proton-donating reagent such as water, methanol, ethanol, or isopropanol in order to deactivate the terminal anion thereof. The amount of proton-donating reagent is preferably 0.1 to 10 mol per mol of the anionic polymerization initiator added to the first continuous stirred tank reactor.

The reaction mixture obtained via steps (I) to (III) thus contains a styrene-conjugated diene-styrene block copolymer and, in some cases, a styrene-conjugated diene diblock copolymer and a styrene polymer. The total amount of styrene-conjugated diene diblock copolymer and styrene polymer is preferably at most 20 wt % of the total amount of the polymers contained in the reaction mixture, more preferably at most 10%, and yet more preferably at most 5%. That is, if the total amount of styrene-conjugated diene diblock copolymer and styrene polymer is larger than the above range, the toughness and the HDT are undesirably degraded.

The conversion of monomers such as styrene and the conjugated diene into the polymer is at least 90%, preferably at least 95%, and more preferably at least 99%.

When styrene and the conjugated diene are added in steps (I) to (III), a styrenic monomer such as *o*-methylstyrene, *m*-methylstyrene, *p*-methylstyrene, $\alpha$-methylstyrene, vinylnaphthalene, or $\alpha$-methylvinylnaphthalene may be added, as a component other than styrene and the conjugated diene, in the range up to and including 10 wt % of the total of the styrene and the conjugated diene. They may be added singly or as a combination of two or more types.

In the present invention, the above-mentioned polymer is further hydrogenated in step (IV) to give the hydrogenated styrene-conjugated diene-styrene block copolymer.

Hydrogenation is achieved by hydrogenating styrene-derived aromatic rings and conjugated diene-derived carbon-carbon double bonds contained in the styrene-conjugated diene-styrene block copolymer in the presence of a hydrogenation catalyst.

The hydrogenation catalyst is not particularly limited as long as it can hydrogenate the aromatic rings and the carbon-carbon double bonds contained in the copolymer. Specific preferred examples include solid catalysts in which a noble metal such as nickel, palladium, platinum, cobalt, ruthenium, or rhodium, an oxide thereof, a salt thereof, or a complex thereof, is supported on a porous support such as carbon, alumina, silica, silica-alumina, or diatomaceous earth. Among these catalysts, those in which nickel, palladium, platinum, or ruthenium is supported on alumina, silica, silica-alumina, or diatomaceous earth are preferably used because of their high activity. Specific examples thereof include nickel/silica, nickel/alumina, nickel/silica-alumina, nickel/diatomaceous earth, palladium/silica, palladium/alumina, palladium/silica-alumina, palladium/diatomaceous earth, platinum/silica, platinum/alumina, platinum/silica-alumina, platinum/diatomaceous earth, ruthenium/silica, ruthenium/alumina, ruthenium/silica-alumina, and ruthenium/diatomaceous earth and, thereamong, nickel/silica, nickel/alumina, nickel/silica-alumina, palladium/silica, palladium/alumina, and palladium/silica-alumina are preferable. Such a hydrogenation catalyst is preferably used in the range of 0.5 to 40 wt % relative to the copolymer, although it depends on the catalytic activity.

The hydrogenation reaction may be carried out after isolating the polymer from the polymerization reaction, but the hydrogenation reaction may be carried out using the reaction mixture discharged from step (III) as it is after adding a proton-donating reagent, or by further adding a necessary solvent. Such a solvent is preferably selected while taking into consideration the function of the hydrogenation catalyst, the presence of side reactions such as molecular chain cleavage, the solubility of the polymer before and after the hydrogenation reaction, etc., and specific examples thereof include C4-C12 aliphatic hydrocarbons such as butane, *n*-pentane, *n*-hexane, and *n*-heptane; C4-C12 alicyclic hydrocarbons such as cyclobutane, cyclopentane, methylcyclopentane, cyclohexane, methylcyclohexane, cycloheptane, cyclooctane, and decalin; and C4-C12 ethers such as diethyl ether, tetrahydrofuran, and methyl *t*-butyl ether. Among these solvents, cyclohexane, methylcyclohexane, and methyl *t*-butyl ether are particularly preferred, depending on the type of catalyst. In order to increase the reaction activity or prevent the molecular weight from being reduced by molecular chain cleavage due to hydrogenolysis, a polar solvent such as an ester or an alcohol may be added to the above-mentioned solvent in a range that does not interfere with the solubility of the polymer.

In the present invention, the hydrogenation reaction is preferably carried out in the above-mentioned solvent system such that the concentration of the copolymer is in the range of 3 to 50 wt %. When the concentration of the copolymer is less than 3 wt %, it is undesirable from the viewpoint of productivity and economy, and when it exceeds 50 wt %, the viscosity of the solution is too high, which is undesirable from the viewpoint of handling and reactivity.

With regard to the hydrogenation reaction conditions, the reaction is usually carried out at a hydrogen pressure of 3 to 25 MPa and a reaction temperature of 70°C to 220°C, although it depends on the catalyst used. When the reaction temperature is too low, it is difficult for the reaction to proceed, and when the reaction temperature is too high, the molecular weight is easily decreased due to hydrogenolysis, which is undesirable. In order to prevent the molecular weight from being reduced by cleavage of the molecular chains and make the reaction proceed smoothly, it is preferable to carry out the hydrogenation reaction at an appropriate temperature and an appropriate hydrogen pressure that are determined according to the type and the concentration of the catalyst used, the solution concentration of the copolymer, the molecular weight, etc.

The degree of hydrogenation of the hydrogenated styrene-conjugated diene-styrene copolymer used in the present invention is 90% to 100%, preferably 95% to 100%, more preferably 98% to 100%, and yet more preferably 99% to 100%. If the degree of hydrogenation is too low, then the transparency and the physical heat resistance of the copolymer are undesirably degraded. Since hydrogenation of carbon-carbon double bonds contained in the conjugated diene monomer-derived unit occurs much more easily than hydrogenation of styrene-derived aromatic rings, when the degree of hydrogenation is at least 90%, carbon-carbon double bonds contained in the cyclic conjugated diene-derived units and the chain-form monomer-derived units are substantially completely hydrogenated.

The number-average molecular weight (Mn) of the hydrogenated styrene-conjugated diene-styrene block copolymer obtained by the above-mentioned process is in the above-mentioned range as a number-average molecular weight obtained by the GPC method on a polystyrene basis. The number-average molecular weight of the hydrogenated styrene-conjugated diene-styrene block copolymer obtained by the GPC method is usually about 50% to 100% of the number-average molecular weight of the copolymer prior to the hydrogenation; this is not due to molecular chain cleavage but rather is due to the influence of the polystyrene basis.

It is preferable for the hydrogenation reaction of the hydrogenated styrene-conjugated diene-styrene block copolymer not to be accompanied by molecular chain cleavage, and this can be made clear from observing that the molecular weight distribution before and after the hydrogenation is hardly changed. That is, the molecular weight distribution of the hydrogenated styrene-conjugated diene-styrene block copolymer is preferably substantially the same as the molecular weight distribution of the styrene-conjugated diene-styrene block copolymer prior to hydrogenation and, more specifically, it preferably contains 1% to 20% of a high molecular weight component having a molecular weight that is at least three times the number-average molecular weight (Mn) obtained by the GPC method. It is more preferably 3% to 18%, and yet more preferably 4% to 15%. After completion of the hydrogenation reaction, the catalyst can be removed by a known post-treatment method such as centrifugation or filtration. In the present invention in which the hydrogenated copolymer is used in optical material applications, it is necessary to minimize the residual metal catalyst component in the resin used as the hydrogenation catalyst, and the amount of such a residual metal catalyst is preferably at most 10 ppm, more preferably at most 1 ppm, and yet more preferably at most 500 ppb. In particular, it is preferable in the present invention for the hydrogenated styrene-conjugated diene-styrene block copolymer to have, in the residual metal catalyst, a transition metal content of at most 10 ppm, and more preferably at most 5 ppm. A target hydrogenated styrene-conjugated diene-styrene block copolymer can be obtained by a method such as solvent evaporation, stripping, or reprecipitation from a polymer solution from which the hydrogenation catalyst has been removed.

(Composition, molding material)

The hydrogenated styrene-conjugated diene-styrene block copolymer obtained in the present invention may be a blend of copolymers having various molecular weights or a composition with other polymers according to the intended purpose. The mixing ratio is not particularly limited and may be determined appropriately taking into consideration the physical properties of the composition, but it is usually preferably 1/99 to 99/1 as a ratio by weight of the hydrogenated styrene-conjugated diene-styrene copolymer/polymers to be mixed, more preferably 20/80 to 80/20, and yet more preferably 40/60 to 60/40. Examples of said other polymers include hydrogenated styrenic polymers described in JP-A-63-4391 (JP-A denotes a Japanese unexamined patent application publication) and hydrogenated styrenic hydrocarbon-conjugated dienic hydrocarbon copolymers described in JP-A-10-116442. Among these, hydrogenated styrene polymers are particularly preferable.

The number-average molecular weight (Mn) of the hydrogenated styrene-conjugated diene-styrene block copolymer composition is in the range of 30,000 to 300,000 g/mol as a molecular weight obtained by the gel permeation chromatography (GPC) method on a polystyrene basis, preferably 50,000 to 250,000 g/mol, and more preferably 60,000 to 200,000 g/mol. If the number-average molecular weight is larger than the above range, the melt viscosity of the composition is too high and it is undesirably difficult to carry out melt molding. If it is less than the above range, although the melt viscosity of the composition is low, the toughness is undesirably degraded.

The reduced viscosity measured in dilute solution is also an important index for estimating the molecular weight. In the present invention, when it is expressed as a reduced viscosity $\eta sp/c$ measured in a 0.5 g/dL toluene solution at 30°C, the reduced viscosity is preferably in the range of 0.1 to 5 dL/g, and more preferably 0.2 to 2 dL/g.

The hydrogenated styrene-conjugated diene-styrene block copolymer composition preferably contains 1% to 30% of a high molecular weight component having a molecular weight that is at least three times the number-average molecular weight (Mn) obtained by the GPC method, more preferably 3% to 25%, and yet more preferably 4% to 20%. If the amount of high molecular weight component is less than the above range, the heat distortion temperature and the toughness are undesirably degraded, and if it is larger than the above range, the moldability is extremely poor, which is undesirable.

Furthermore, with regard to the molecular weight distribution of the hydrogenated styrene-conjugated diene-styrene block copolymer composition, the value for the ratio Mw/Mn of the weight-average molecular weight (Mw) obtained by the GPC method to Mn is preferably 1.3 to 2.5, and more preferably 1.4 to 2.2. Moreover, the value for the ratio Mz/Mn of the z-average molecular weight (Mz) similarly obtained by the GPC method to Mw is preferably 1.1 to 3.0, more preferably 1.3 to 2.5, and yet more preferably 1.3 to 2.2.

As hereinbefore described, even if the amount of high molecular weight component contained in the hydrogenated styrene-conjugated diene-styrene block copolymer composition is small, it can contribute to an improvement in the heat distortion temperature, and if it is in the above-mentioned range, there is little effect on the melt viscosity of the composition, and the effect on the moldability is not large.

The hydrogenated styrene-conjugated diene-styrene block copolymer or the hydrogenated styrene-conjugated diene-styrene block copolymer composition according to the present invention preferably have relaxation spectra at 200°C that satisfy Expression (2) below.

$$\log (H (\tau) \cdot \tau) \le 6.5 \ (10^{-2} \le \tau \le 10^{4}) \tag{2}$$

(In Expression (2), log denotes a common logarithm, $\tau$ is a relaxation time (sec), and H ($\tau$) (Pa) is a relaxation spectrum at 200°C.) Such conditions can be achieved by the hydrogenated styrene-conjugated diene-styrene block copolymer or the hydrogenated styrene-conjugated diene-styrene block copolymer composition that satisfy the above-mentioned conditions.

If the relaxation spectrum falls outside the above-mentioned range of Expression (2), when the hydrogenated copolymer is used as, for example, a resin material for a high recording density optical disk substrate, it tends to be difficult to achieve sufficient pit or land-groove replicability and satisfy the distortion of the optical disk substrate. This is because, if the relaxation spectrum falls outside the range of Expression (2), the residual stress during molding cannot be relaxed satisfactorily, and this residual stress may cause distortion or poor replication.

Such a relaxation spectrum can be determined from the complex modulus of elasticity results obtained from a vibration experiment, etc. by a method described in, for example, 'Shin Butsurigaku Shinpo Shirizu (New Advances in Physics Series) 8 Rheology' (M. Yamamoto, published by Maki Shoten, 1964). Expression (2) shows that it is preferable for the relaxation spectrum H($\tau$) at 200°C to be within the range of Expression (2) during a relaxation time of $10^{-2} \le \tau \le 10^{4}$. With regard to the range of the relaxation spectrum, it is preferable for the product of H($\tau$)·$\tau$ in the above-mentioned expression to be as small as possible in terms of replicability and distortion, but the molecular weight and reduced viscosity of copolymers having a very small H($\tau$)·$\tau$ are too low and they are not practical. A more preferred range in the above-mentioned expression is as shown in Expression (2a) below.

$$\log (H (\tau) \cdot \tau) \le 6.0 \ (10^{-2} \le \tau \le 10^{4}) \tag{2a}$$

(In Expression (2a), log denotes a common logarithm, $\tau$ denotes a relaxation time (sec), and H ($\tau$) (Pa) denotes a relaxation spectrum at 200°C.)

The melt viscosity at a temperature of 300°C and a shear rate of $10^3$ (1/s) of the hydrogenated styrene-conjugated diene-styrene block copolymer or the hydrogenated styrene-conjugated diene-styrene block copolymer composition according to the present invention is preferably 10 to 200 (Pa· sec) (100 to 2,000 poise). Such conditions can be achieved by the hydrogenated styrene-conjugated diene-styrene block copolymer or the hydrogenated styrene-conjugated diene-styrene block copolymer composition that satisfy the above-mentioned conditions. If the melt viscosity is lower than the above range, then the moldability is superior, and particularly when used as a material for a high density optical disk substrate, although the pit or land-groove replicability is excellent, a practical toughness cannot be maintained, which is undesirable. When the melt viscosity is higher than the above range, although the toughness is reasonably high, the moldability and the replicability are undesirably degraded. More preferably, the melt viscosity at a temperature of 300°C and a shear rate of $10^3$ (1/s) is 50 to 130 Pa/sec (500 to 1,300 poise).

In order to improve the thermochemical stability during melt molding or prevent autooxidation, a hindered phenol stabilizer such as Irganox 1010 or 1076 (manufactured by Ciba Specialty Chemicals), a phosphine stabilizer such as Irgaphos 168 (manufactured by Ciba Specialty Chemicals), or an acrylic hindered phenol stabilizer such as a Sumilizer GM or Sumilizer GS (manufactured by Sumitomo Chemical Co., Ltd.) is preferably added to the hydrogenated styrene-conjugated diene-styrene copolymer of the present invention. In the present invention, non-phosphorus stabilizers are preferably used. Furthermore, a mold release agent such as a long-chain aliphatic alcohol or a long-chain aliphatic ester, and other additives such as a lubricant, a plasticizer, a UV absorber, and an antistatic agent may be added as necessary.

The molding material of the present invention comprises mainly the above-mentioned hydrogenated styrene-conjugated diene-styrene block copolymer or hydrogenated styrene-conjugated diene-styrene block copolymer composition.

The molding material of the present invention can be molded by a known method such as injection molding, injection compression molding, extrusion molding, or solution casting. In particular, it is suitably used for production of an optical member such as an optical disk substrate or an optical lens by injection molding or injection compression molding and, in particular, production of an optical disk substrate for a blue laser. In such molding, the resin temperature is in the range of 250°C to 360°C, preferably 270°C to 350°C, and yet more preferably 280°C to 340°C, and the mold temperature is in the range of 60°C to 140°C, preferably 70°C to 130°C, and more preferably 80°C to 125°C.

In various types of moldings obtained in this way, including the optical disk substrate and the optical lens, it is preferable for a micro-phase separation structure to be formed, in which the hydrogenated conjugated diene polymer blocks form islands. If no micro-phase separation structure is formed, the toughness and the heat resistance are undesirably degraded.

In accordance with the present invention there are provided a hydrogenated styrene-conjugated diene-styrene copolymer having a restricted molecular weight distribution, and an optical material. Since this hydrogenated copolymer has excellent mechanical properties and excellent heat resistance and moldability in addition to properties such as transparency that are characteristic of a conventional resin, it can be used suitably as an optical material, including an optical disk substrate.

Brief Explanation of Drawings

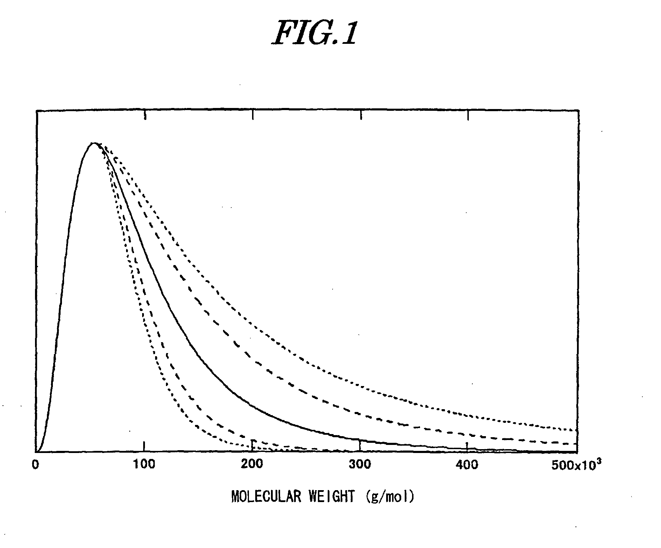

FIG. 1 shows a molecular weight distribution curve (solid line) of a hydrogenated styrene-isoprene-styrene block copolymer obtained in Example 1. The region surrounded by dotted lines represents a region in which $1.3 \leq w/x_0 \leq 3.0$ and $1.5 \leq \rho \leq 3.0$ in Equation (1). The region surrounded by broken lines represents a region in which $1.5 \leq w/x_0 \leq 2.5$ and $1.6 \leq \rho \leq 2.5$ in Equation (1).

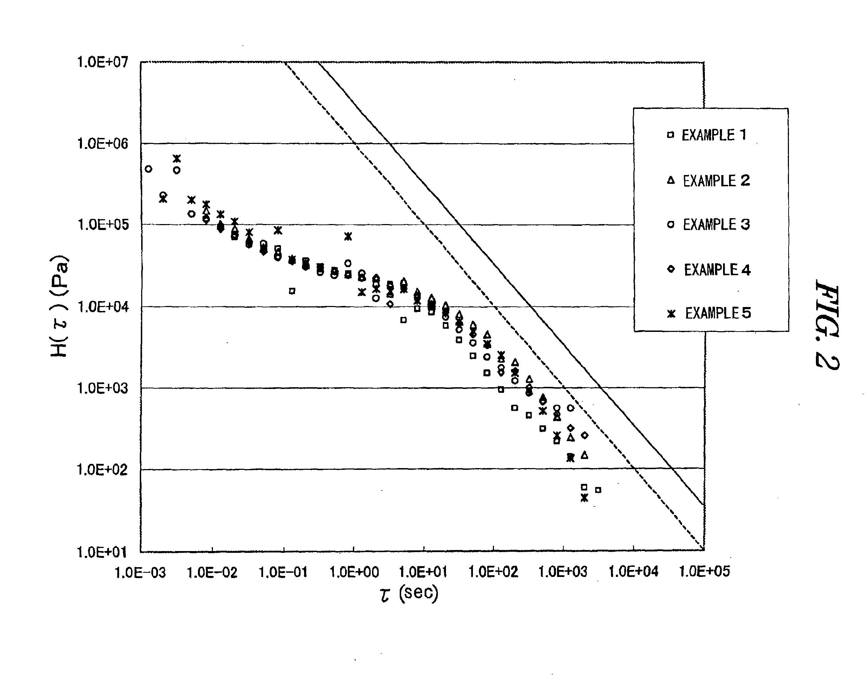

FIG. 2 shows relaxation spectra, at 200°C as a reference, of hydrogenated styrene-isoprene-styrene block copolymers obtained in Examples 1 to 3 and hydrogenated styrene-isoprene-styrene block copolymer compositions obtained in Examples 4 and 5. The solid line represents a case in which equality is achieved in Expression (2), and the dotted line represents a case in which equality is achieved in Expression (2a).

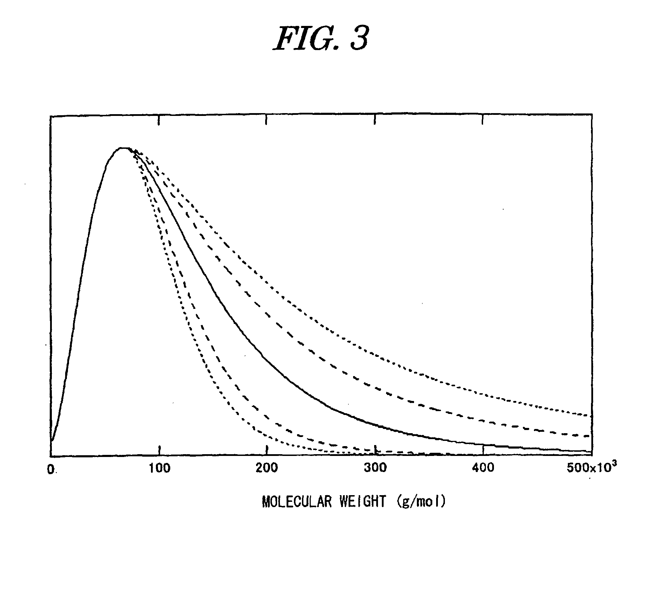

FIG. 3 shows a molecular weight distribution curve (solid line) of a hydrogenated styrene-isoprene-styrene block copolymer obtained in Example 2. The region surrounded by dotted lines represents a region in which $1.3 \leq w/x_0 \leq 3.0$ and $1.5 \leq \rho \leq 3.0$ in Equation (1). The region surrounded by broken lines represents a region in which $1.5 \leq w/x_0 \leq 2.5$ and $1.6 \leq \rho \leq 2.5$ in Equation (1).

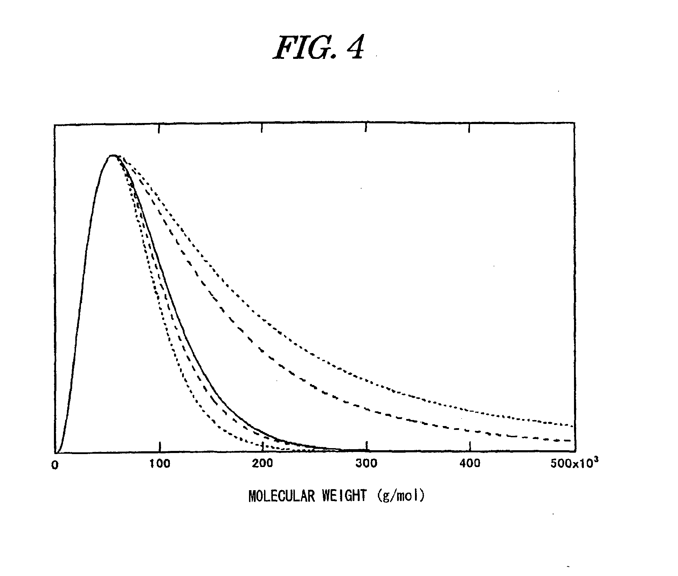

FIG. 4 shows a molecular weight distribution curve (solid line) of a hydrogenated styrene-isoprene-styrene block copolymer obtained in Example 3. The region surrounded by dotted lines represents a region in which $1.3 \leq w/x_0 \leq 3.0$ and $1.5 \leq \rho \leq 3.0$ in Equation (1). The region surrounded by broken lines represents a region in which $1.5 \leq w/x_0 \leq 2.5$ and $1.6 \leq \rho \leq 2.5$ in Equation (1).

Examples

The present invention is explained in detail by reference to Examples. However, the present invention is not limited by these Examples.

(Reagents, solvents)

Styrene and isoprene were purified by distillation from calcium hydride so as to dry them sufficiently. Anhydrous grade cyclohexane and methyl *t*-butyl ether were purchased, and further dried sufficiently by contacting them with 4A molecular sieve or basic alumina.

*n*-Butyllithium and *sec*-butyllithium were commercial cyclohexane solutions and were used without further treatment.

(Measurement of physical properties)

Isoprene content: quantified by $^1$H-NMR measurement using a JNR-EX270 NMR Spectrometer manufactured by JEOL. When the hydrogenation reaction proceeded and was almost completed, since the weight fractions of the styrene-derived polymer unit and the isoprene-derived polymer unit were hardly changed by the hydrogenation reaction, the value thus measured was defined as the weight fraction of the hydrogenated conjugated diene polymer block.

Number-average molecular weight (Mn), weight-average molecular weight (Mn), and z-average molecular weight (Mz): determined from the molecular weight distribution at 40°C on a polystyrene basis measured by gel permeation chromatography (GPC; 'Syodex System-11', manufactured by Showa Denko K.K.) with tetrahydrofuran as a solvent.

Molecular weight distribution curve: derived by correcting the time-strength curve f(t) obtained by the GPC method to a molecular weight-strength curve f(x) using Equation (3) below.

$$f(x) = f(t) \times (0.43429)/\left\{(3At^2 + 2Bt + C) \times x\right\} \qquad (3)$$

(In the Equation, f(x) is strength at a molecular weight of x, f(t) is strength at a time (t), and A, B, and C are constants that satisfy $\log(x) = At^3 + Bt^2 + Ct + D$ in a relationship between time and molecular weight obtained using a polystyrene standard.)

Degree of hydrogenation: quantified by $^1$H-NMR measurement using a JNR-EX270 NMR spectrometer manufactured by JEOL.

Total light transmittance: measured according to JIS K7105.

Izod impact strength: measured by carrying out an impact test without notch according to JIS K7110.

Elongation at break: elongation at tensile break was measured according to JIS K7113.

Heat distortion temperature: measured according to JIS K7206.

Relaxation spectrum: a vibration test was carried out using a model RDA II cone-plate type manufactured by Rheometric Scientific Inc. at 200°C, 230°C and 280°C. A master curve at 200°C as a reference was prepared by converting the curve obtained in the vibration test by time-temperature superposition. The master curve was converted into a relaxation spectrum by the method described in 'Shin Butsurigaku Shirizu (New in Physics Series) 8 Rheology' (M. Yamamoto, published by Maki Shoten, 1964, p.39, 2. How to Obtain Complex Modulus of Elasticity), etc.

Melt viscosity: measured using a Koka type (capillary type) flow tester manufactured by Shimadzu Corporation, and the melt viscosity at a shear rate of $10^3$ (s$^{-1}$) was calculated.

Presence of micro-phase separation structure: a molded piece was stained using ruthenium tetraoxide and inspected.

Molding of molded piece: molded using an injection molding machine (M50B manufactured by Meiki Co., Ltd.)

Molding of optical disk substrate: a 0.6 mm thick optical disk substrate was molded by injection compression molding using an injection molding machine (MO40D3H, manufactured by Nissei Plastic Industrial Co., Ltd.) using a DVD mold and a stamper (2.6 GB capacity) having a land-groove structure.

Degree of replication: for evaluation of the replicability, the groove depth was measured from the cross sectional shape at a position 58 mm from the center using an atomic force microscope (SFA-300, manufactured by Seiko Instruments), and the degree of replication was calculated using the equation below.

Degree of replication = (groove depth of substrate)/(groove depth of

stamper)

Example 1

A polymerization reaction was carried out using equipment in which a first continuous stirred tank reactor, a second continuous stirred tank reactor, and a third continuous stirred tank reactor, which were made of metal and equipped with a stirrer, were connected by pipes in that order. The interiors of the continuous stirred tank reactors were dried well and flushed with nitrogen. To the first continuous stirred tank reactor were added styrene, n-butyllithium, and cyclohexane at an overall rate of 0.18 L/min. The concentrations of styrene and n-butyllithium added were 0.94 mol/L and 0.0044 mol/L respectively. To the second continuous stirred tank reactor was added a 4.2 mol/L cyclohexane solution of isoprene at 0.014 L/min. To the third continuous stirred tank was added a 1.1 mol/L cyclohexane solution of styrene at 0.16 L/min. The temperature of the reaction mixtures in the first to third continuous stirred tank reactors was 70°C. Polymerization reactions were carried out while keeping all the continuous stirred tank reactors liquid-tight. The reaction mixture was taken out of the third continuous stirred tank reactor, and adding isopropanol to the reaction mixture gave a styrene-isoprene-styrene block copolymer solution. The change over time in the molecular weight of the polymer in the reaction mixture was monitored, and when it became almost constant, the reaction mixture was collected. At this stage, the yield of the polymer (conversion of monomers into polymer) was at least 99%, and the yield of the polymer at the exit of each of the continuous stirred tank reactors was also at least 99%. To the reaction mixture thus collected was added palladium/silica at 15 wt % relative to the polymer, and a hydrogenation reaction was carried out at a hydrogen pressure of 9.8 MPa and a temperature of 180°C for 12 hours. After the reaction was completed, the hydrogenation catalyst was removed from the reaction mixture. Sumilizer GS was added at 2700 ppm relative to the hydrogenated copolymer, and the solvent was then removed to give a hydrogenated styrene-isoprene-styrene block copolymer. The conditions of the polymerization reaction and the hydrogenation reaction, and the properties of the copolymer after the polymerization reaction and the hydrogenated copolymer after the hydrogenation reaction are shown in Table 1. The molecular weight distribution curve obtained by the GPC method is shown in FIG. 1. As shown in FIG. 1, the molecular weight distribution curve was substantially within the range of Equation (1).

The hydrogenated styrene-isoprene-styrene block copolymer thus obtained was molded using an injection molding machine. Molding was carried out at a cylinder temperature of 280°C and a mold temperature of 70°C. The molded piece thus obtained was used for measurement of various physical properties. The results are shown in Table 2. The relaxation spectrum at 200°C is shown in FIG. 2. As shown in FIG. 2, the relaxation spectrum was within the range of Expression (2).

The hydrogenated styrene-isoprene-styrene block copolymer thus obtained was molded into an optical disk substrate using an injection molding machine. Molding was carried out at a cylinder temperature of 330°C and a mold temperature of 110°C. No cracks were formed during molding. The degree of replication was 98%, and sufficient replication could be achieved. The degree of replication after annealing at 80°C for 8 hours was 96%, and land-groove distortion was adequately low. The results are shown together in Table 2.

Reference Example 1

The solutions discharged from the continuous stirred tank reactors in Example 1 were analyzed. The results were that the reaction mixture discharged from the first continuous stirred tank reactor contained $5.7 \times 10^{-4}$ mol/L (13% of the $n$-butyllithium added to the first continuous stirred tank reactor) of $n$-butyllithium that had not reacted in the first continuous stirred tank reactor. No unreacted $n$-butyllithium was detected in the reaction mixture discharged from the second continuous stirred tank reactor. This suggested that the $n$-butyllithium that had not reacted in the first continuous stirred tank reactor reacted with isoprene in the second continuous stirred tank reactor to form polyisoprenyllithium. This polyisoprenyllithium further copolymerized with styrene in the third continuous stirred tank reactor to form a conjugated diene-styrene diblock copolymer, and the amount thereof was estimated to be at most 13 wt % of the entire polymer. It was therefore estimated that the hydrogenated styrene-conjugated diene-styrene block copolymer obtained in Example 1 contained at most 13 wt % of the hydrogenated styrene-isoprene diblock copolymer.

Example 2

The procedure of Example 1 was repeated except that the reaction conditions were changed, and a hydrogenated styrene-isoprene-styrene block copolymer was obtained. The results are given in Table 1. The molecular weight distribution curve obtained by the GPC method is shown in FIG. 3. As shown in FIG. 3, the molecular weight distribution curve was substantially within the range of Equation (1).

The physical properties and the optical disk substrate characteristics were evaluated in the same manner as in Example 1 using the hydrogenated styrene-isoprene-styrene block copolymer thus obtained. The results are given in Table 2. The relaxation spectrum at 200°C is shown in FIG. 2. As shown in FIG. 2, the relaxation spectrum was within the range of Expression (2).

Reference Example 2

As in Reference Example 1, the solutions discharged from the continuous stirred tank reactors in Example 2 were analyzed. The results were that the reaction mixture discharged from the first continuous stirred tank reactor contained $3.8 \times 10^{-4}$ mol/L (10% of the $n$-butyllithium added to the first continuous stirred tank reactor) of $n$-butyllithium that had not reacted in the first continuous stirred tank reactor. No unreacted $n$-butyllithium was detected in the reaction mixture discharged from the second continuous stirred tank reactor. This suggested that the $n$-butyllithium that had not reacted in the first continuous stirred tank reactor reacted with isoprene in the second continuous stirred tank reactor to form polyisoprenyllithium. This polyisoprenyllithium further copolymerized with styrene in the third continuous stirred tank reactor to form an isoprene-styrene diblock copolymer, and the amount thereof was estimated to be at most 10 wt % of the entire polymer. It was therefore estimated that the hydrogenated styrene-isoprene-styrene block copolymer obtained in Example 2 contained at most 10 wt % of the hydrogenated styrene-isoprene diblock copolymer.

Example 3

The procedure of Example 1 was repeated except that *sec*-butyllithium was used instead of *n*-butyllithum and the reaction conditions were changed, and a hydrogenated styrene-isoprene-styrene block copolymer was obtained. The results are given in Table 1. The molecular weight distribution curve obtained by the GPC method is shown in FIG. 4. As shown in FIG. 4, the molecular weight distribution curve was substantially within the range of Equation (1).
The physical properties and the optical disk substrate characteristics of the hydrogenated styrene-isoprene-styrene block copolymer thus obtained were evaluated in the same manner as in Example 1. The results are given in Table 2. The relaxation spectrum at 200°C is shown in FIG. 2. As shown in FIG. 2, the relaxation spectrum was within the range of Expression (2).

Reference Example 3

As in Reference Example 1, the solutions discharged from the continuous stirred tank reactors in Example 3 were analyzed. The results were that the reaction mixture discharged from the first continuous stirred tank reactor contained 6.0 x $10^{-5}$ mol/L (2% of the *sec*-butyllithium added to the first continuous stirred tank reactor) of *sec*-butyllithium that had not reacted in the first continuous stirred tank reactor. No unreacted *sec*-butyllithium was detected in the reaction mixture discharged from the second continuous stirred tank reactor. This suggested that the *sec*-butyllithium that had not reacted in the first continuous stirred tank reactor reacted with isoprene in the second continuous stirred tank reactor to form polyisoprenyllithium. This polyisoprenyllithium further copolymerized with styrene in the third continuous stirred tank reactor to form an isoprene-styrene diblock copolymer, and the amount thereof was estimated to be at most 2 wt % of the entire polymer. It was therefore estimated that the hydrogenated styrene-isoprene-styrene block copolymer obtained in Example 3 contained at most 2 wt % of the hydrogenated styrene-isoprene diblock copolymer.

Comparative Example 1

To a nitrogen-flushed, metal autoclave were added 500 g of polystyrene having a number-average molecular weight of 170,000 and a molecular weight distribution of 2.20, 3,300 g of cyclohexane, 700 g of methyl t-butyl ether, and 80 g of nickel/silica-alumina, and a hydrogenation reaction was carried out at a hydrogen pressure of 10 MPa and a temperature of 180°C for 8 hours. After the solution was taken out of the autoclave, the hydrogenation catalyst was removed by filtration. Sumilizer GS was added as a stabilizer to the solution thus obtained at 2,700 ppm relative to the polymer, and the solvent was then distilled off to give a hydrogenated styrene polymer. The degree of hydrogenation was at least 99%. This hydrogenated styrene polymer had a high heat distortion temperature of 115°C, but its toughness was low, and a large number of cracks were formed during molding of an optical disk substrate. Various physical properties of this hydrogenated styrene polymer and the results of molding of the optical disk substrate are shown in Table 2.

Example 4

The hydrogenated styrene-isoprene-styrene block copolymer solution obtained in Example 1 and the hydrogenated styrene polymer solution obtained in Comparative Example 1 were mixed at a polymer weight ratio of 50:50. Sumilizer GS was added to the solution thus obtained at 2,700 ppm relative to the entire polymer, and the solvent was then distilled off to give a composition comprising the hydrogenated styrene-isoprene-styrene block copolymer and the hydrogenated styrene polymer. Various physical properties of this composition and evaluation of molding of an optical disk substrate are shown in Table 2. The relaxation spectrum at 200°C is shown in FIG. 2. As shown in FIG. 2, the relaxation spectrum was within the range of Expression (2).

Example 5

The hydrogenated styrene-isoprene-styrene block copolymer solution obtained in Example 2 and the hydrogenated styrene polymer solution obtained in Comparative Example 1 were mixed at a polymer weight ratio of 75:25. Sumilizer GS was added to the solution thus obtained at 2,700 ppm relative to the entire polymer, and the solvent was then distilled off to give a composition comprising the hydrogenated styrene-isoprene-styrene block copolymer and the hydrogenated styrene polymer. Various physical properties of this composition and evaluation of molding of an optical disk substrate are shown in Table 2. The relaxation spectrum at 200°C is shown in FIG. 2. As shown in FIG. 2, the relaxation spectrum was within the range of Expression (2).

Comparative Example 2

A well dried metal autoclave flushed with nitrogen was charged with 270 g of styrene and 2,500 g of cyclohexane. After the solution had been heated to 40°C, 4.6 mL of a 1.6M hexane solution of *n*-butyllithium was added thereto, and it was heated to 50°C and reacted for 2 hours. 61 g of isoprene was then added as a cyclohexane solution and reacted for a further 2 hours. 270 g of styrene and 700 g of cyclohexane were then added and reacted for a further 2 hours. After the reaction was completed, 0.7 g of isopropanol was added and a styrene-isoprene-styrene block copolymer was obtained. The number-average molecular weight obtained by GPC was 83,000, and the styrene/isoprene ratio by weight from $^1$H-NMR was 90/10.

To this solution were added 1,300 g of cyclohexane, 700 g of methyl *t*-butyl ether, and 80 g of nickel/silica-alumina, and a hydrogenation reaction was carried out under a hydrogen pressure of 10 MPa at a temperature of 180°C for 4 hours. After the solution was taken out of the autoclave, the hydrogenation catalyst was removed by filtration. Sumilizer GS was added as a stabilizer to the solution thus obtained at 2,700 ppm relative to the polymer, and the solvent was then distilled off to give a hydrogenated styrene-isoprene-styrene block copolymer. The degree of hydrogenation was at least 99%. There was contained in this hydrogenated copolymer 0% of a component having a molecular weight that was at least three times the number-average molecular weight. This hydrogenated copolymer did not have high toughness, and some cracks were formed during molding of an optical disk substrate. The heat distortion temperature was 96°C, which was not high, and the degree of replication of the molded optical disk substrate decreased from 97% before annealing to 86% after annealing. Various physical properties of this hydrogenated styrene-isoprene-styrene block copolymer and evaluation of molding of the optical disk substrate are shown in Table 2.

Comparative Example 3

A well dried metal autoclave flushed with nitrogen was charged with 270 g of styrene and 2,500 g of cyclohexane. After the solution had been heated to 40°C, 4.5 mL of a 1.6M hexane solution of *n*-butyllithium was added thereto, and it was heated to 50°C and reacted for 2 hours. 96 g of isoprene was then added as a cyclohexane solution and reacted for a further 2 hours. 270 g of styrene and 700 g of cyclohexane were then added and reacted for a further 2 hours. After the reaction was completed, 0.7 g of isopropanol was added, and a styrene-isoprene-styrene block copolymer was obtained. The number-average molecular weight obtained by GPC was 91,000, and the styrene/isoprene ratio by weight from $^1$H-NMR was 85/15.

To this solution was added 80 g of palladium/silica, and a hydrogenation reaction was carried out under a hydrogen pressure of 10 MPa at a temperature of 180°C for 8 hours. After the solution was taken out of the autoclave, the hydrogenation catalyst was removed by filtration. Sumilizer GS was added as a stabilizer to the solution thus obtained at 2,700 ppm relative to the polymer, and the solvent was then distilled off to give a hydrogenated styrene-isoprene-styrene polymer. The degree of hydrogenation was at least 99%. There was contained in this hydrogenated copolymer 0% of a component having a molecular weight that was at least three times the number-average molecular weight. This hydrogenated copolymer had high toughness, and no cracks were formed during molding of an optical disk substrate. However, the heat distortion temperature was 93°C, which was not high, and the degree of replication of the molded optical disk substrate changed from 93% before annealing to 80% after annealing. Various physical properties of this hydrogenated styrene-isoprene-styrene block copolymer and evaluation of molding of the optical disk substrate are shown in Table 2.

Table 1

|  |  | Example 1 | Example 2 | Example 3 |
|---|---|---|---|---|
| Polymerization reaction |  |  |  |  |
| First continuous stirred tank reactor |  |  |  |  |
| Reaction mixture volume ($V_1$) | L | 34 | 34 | 34 |
| Styrene concentration ($C_{S1}$) | mol/L | 0.94 | 0.94 | 0.94 |
| Butyllithium concentration ($C_B$) | mol/L | 0.0044 | 0.0038 | 0.0029 |
| Reaction solution flow rate ($V_1$) | L/min | 0.18 | 0.25 | 0.18 |
| Temperature | °C | 70 | 70 | 70 |
| Second continuous stirred tank reactor |  |  |  |  |

Table 1   (continued)

| | | Example 1 | Example 2 | Example 3 |
|---|---|---|---|---|
| Polymerization reaction | | | | |
|     Reaction mixture volume ($V_2$) | L | 34 | 34 | 34 |
|     Isoprene concentration ($C_I$) | mol/L | 4.2 | 4.2 | 4.2 |
|     Reaction solution flow rate ($v_2$) | L(min | 0.014 | 0.030 | 0.014 |
|     Temperature | °C | 70 | 70 | 70 |
| Third continuous stirred tank reactor | | | | |
|     Reaction mixture volume ($V_3$) | L | 34 | 34 | 34 |
|     Styrene concentration ($C_{S3}$) | mol/L | 1.1 | 1.1 | 1.1 |
|     Reaction solution flow rate ($v_3$) | L/min | 0.16 | 0.21 | 0.16 |
|     Temperature | °C | 70 | 70 | 70 |
| $V_1 / v_1$ | min | 189 | 136 | 189 |
| $V_2 / (v_1 + v_2)$ | min | 175 | 121 | 175 |
| $V_3 / (v_1 + v_2 + v_3)$ | min | 96 | 69 | 96 |
| $(C_{S1}v_1 + C_I v_2 + C_{S3}v_3) / C_B v_1$ | mol/mol | 510 | 623 | 774 |
| Copolymer | | | | |
| Isoprene content | wt % | 10 | 15 | 10 |
| Number-average molecular weight (Mn) | | 80600 | 91200 | 84000 |
| Weight-average molecular weight (Mw) | | 125000 | 136000 | 119000 |
| z-Average molecular weight (Mz) | | 188000 | 215000 | 162000 |
| Mw/Mn | | 1.55 | 1.49 | 1.42 |
| Mz/Mw | | 1.50 | 1.58 | 1.36 |
| Component having a molecular weight of at least 3 times Mn | wt % | 10 | 9 | 4 |
| Hydrogenation reaction | | | | |
| Hydrogen pressure | MPa | 9.8 | 9.8 | 9.8 |
| Temperature | °C | 180 | 180 | 180 |
| Time | h | 12 | 12 | 12 |
| Hydrogenated copolymer | | | | |
| Degree of hydrogenation | % | > 99 | > 99 | > 99 |
| Isoprene content | wt % | 10 | 15 | 10 |
| Number-average molecular weight (Mn) | | 64000 | 79000 | 68000 |
| Weight-average molecular weight (Mw) | | 100000 | 119000 | 96000 |
| z-Average molecular weight (Mz) | | 151000 | 188000 | 131000 |
| Mw/ Mn | | 1.56 | 1.51 | 1.41 |
| Mz/Mw | | 1.51 | 1.58 | 1.36 |
| Component having a molecular weight of at least 3 times Mn | wt % | 9 | 9 | 4 |

Table 2

| | | Example 1 | Example 2 | Example 3 | Example 4 | Example 5 | Comp. Ex. 1 | Comp. Ex. 2 | Comp. Ex. 3 |
|---|---|---|---|---|---|---|---|---|---|
| Hydrogenated copolymer | | | | | | | | | |
| Isoprene content | wt % | 10 | 15 | 10 | 5 | 11 | 0 | 10 | 15 |
| Number-average molecular weight (Mn) | | 64000 | 79000 | 68000 | 72000 | 74000 | 76000 | 83000 | 91000 |
| Weight-average molecular weight (Mw) | | 100000 | 119000 | 96000 | 134000 | 141000 | 171000 | 98000 | 114000 |
| z-Average molecular weight (Mz) | | 151000 | 188000 | 131000 | 251000 | 267000 | 333000 | 112000 | 133000 |
| Mw / Mn | | 1.56 | 1.51 | 1.41 | 1.86 | 1.91 | 2.25 | 1.18 | 1.25 |
| Mz / Mw | | 1.51 | 1.58 | 1.36 | 1.87 | 1.89 | 1.95 | 1.14 | 1.17 |
| Component having a molecular weight of at least 3 times Mn | wt % | 9 | 9 | 4 | 17 | 13 | 15 | 0 | 0 |
| Molding | | | | | | | | | |
| Total light transmittance | % | 91 | 91 | 91 | 91 | 91 | 91 | 91 | 91 |
| Glass transition temperature | °C | 146 | 145 | 147 | 147 | 146 | 150 | 145 | 143 |
| Izod impact strength | kJ/m$^2$ | 6.6 | 9.1 | 6.4 | 6.2 | 7.3 | 4.9 | 5.5 | 6.0 |
| | (kgf· cm/cm$^2$) | (6.7) | (9.3) | (6.5) | (6.3) | (7.4) | (5.0) | (5.6) | (6.1) |
| Elongation at tensile break | % | 4.5 | 11 | 4.3 | 3.7 | 8.8 | 2.1 | 2.9 | 3.4 |
| Heat distortion temperature | °C | 106 | 105 | 108 | 111 | 107 | 115 | 95 | 93 |
| Melt viscosity (300°C) | | | | | | | | | |
| Shear rate 10$^2$ (1/s) | Pa· sec | 230 | 410 | 250 | 430 | 400 | 430 | 300 | 400 |
| | (Poise) | (2300) | (4100) | (2500) | (4300) | (4000) | (4300) | (3000) | (4000) |
| Shear rate 10$^3$ (1/s) | Pa· sec | 78 | 110 | 83 | 110 | 110 | 120 | 90 | 120 |
| | (Poise) | (780) | (1100) | (830) | (1100) | (1100) | (1200) | (900) | (1200) |
| Presence of phase separation | nm | Yes | Yes | Yes | Yes | Yes | No | Yes | Yes |
| Disk substrate | | | | | | | | | |
| Molding conditions | | | | | | | | | |
| Cylinder temperature | °C | 330 | 330 | 330 | 340 | 340 | 340 | 330 | 330 |
| Mold temperature | °C | 110 | 105 | 110 | 125 | 110 | 130 | 110 | 105 |
| Occurrence of cracks | | No | No | No | No | No | Yes | Yes | No |
| Degree of replication | | | | | | | | | |
| Initially | % | 98 | 96 | 98 | 94 | 95 | 90 | 97 | 93 |
| After annealing | % | 96 | 94 | 96 | 94 | 95 | 90 | 86 | 80 |

**Claims**

1. A hydrogenated styrene-conjugated diene-styrene block copolymer obtained by hydrogenating a styrene-conjugated diene-styrene block copolymer that comprises mainly styrene polymer blocks and a conjugated diene polymer block, the hydrogenated styrene-conjugated diene-styrene block copolymer comprising:

    (A) a hydrogenated styrene polymer block/hydrogenated conjugated diene polymer block ratio by weight of 75/25 to 97/3;
    (B) a degree of hydrogenation of at least 90%;
    (C) a number-average molecular weight (Mn) obtained by a gel permeation chromatography (GPC) method of 30,000 to 200,000 g/mol; and
    (D) 1 to 20 wt % of a high molecular weight component having a molecular weight that is at least three times the number-average molecular weight (Mn) obtained by the GPC method.

2. The hydrogenated styrene-conjugated diene-styrene block copolymer according to Claim 1 wherein the conjugated diene is isoprene.

3. The hydrogenated styrene-conjugated diene-styrene block copolymer according to Claim 1 or 2 wherein the ratio Mw/Mn of a weight-average molecular weight (Mw) obtained by the GPC method to the number-average molecular weight (Mn) is 1.3 to 2.2.

4. The hydrogenated styrene-conjugated diene-styrene block copolymer according to any one of Claims 1 to 3 wherein the ratio Mz/Mw of a z-average molecular weight (Mz) obtained by the GPC method to the weight-average molecular weight (Mw) is 1.1 to 2.5.

5. The hydrogenated styrene-conjugated diene-styrene block copolymer according to any one of Claims 1 to 4 wherein, with regard to a molecular weight distribution curve obtained by the GPC method, the distribution curve in a region where the molecular weight is at a peak or larger than the peak is preferably substantially within a region represented by Equation (1) below.

$$f(x) = H\exp\left[\frac{-\ln(2)}{(\ln\rho)^2}\left(\ln\left[\frac{(x-x_0)(\rho^2-1)}{w\rho}+1\right]\right)^2\right] \quad (x \geq x_0) \qquad (1)$$

(In the Equation, x denotes molecular weight, $x_0$ denotes molecular weight at the peak of the molecular weight distribution curve obtained by the GPC method, H denotes height at $x_0$ in the molecular weight distribution curve obtained by the GPC method, and w and $\rho$ satisfy $1.3 \leq w/x_0 \leq 3.0$ and $1.5 \leq \rho \leq 3.0$ respectively.)

6. The hydrogenated styrene-conjugated diene-styrene block copolymer according to any one of Claims 1 to 5 wherein the hydrogenated styrene-conjugated diene-styrene block copolymer comprises mainly a hydrogenated styrene-conjugated diene-styrene triblock copolymer, and the content of a hydrogenated styrene-conjugated diene diblock copolymer and/or a hydrogenated styrene polymer contained in the hydrogenated styrene-conjugated diene-styrene block copolymer is 0 to 20 wt %.

7. A production process for the hydrogenated styrene-conjugated diene-styrene copolymer according to any one of Claims 1 to 6, the process comprising:

    a step of continuously synthesizing the styrene-conjugated diene-styrene block copolymer using a continuous stirred tank reactor; and
    a step of hydrogenating the copolymer.

8. The production process for the hydrogenated styrene-conjugated diene-styrene copolymer according to Claim 7, the process comprising:

    step (I) of continuously supplying styrene and an anionic polymerization initiator to a first continuous stirred tank reactor and continuously polymerizing the styrene;

step (II) of continuously supplying a reaction mixture obtained in step (I) and a conjugated diene to a second continuous stirred tank reactor and continuously block-copolymerizing the conjugated diene;

step (III) of continuously supplying a reaction mixture obtained in step (II) and styrene to a third continuous stirred tank reactor and continuously block-copolymerizing the styrene; and

step (IV) of adding a hydrogenation catalyst to a reaction mixture obtained in step (III) and carrying out a hydrogenation reaction.

9. The production process according to Claim 8 wherein in steps (I) to (III) polymerization is carried out under conditions that satisfy all the expressions (a) to (g) below.

(a) $1 \leq V_1/v_1 \leq 500$

(b) $1 \leq V_2/(v_1 + v_2) \leq 500$

(c) $1 \leq V_3/(v_1 + v_2 + v_3) \leq 500$

(d) $0.01 \leq C_{S1} \leq 9$

(e) $0.01 \leq C_I \leq 10$

(f) $0.01 \leq C_{S3} \leq 9$

(g) $2 \times 10^2 \leq (C_{S1}V_1 + C_Iv_2 + C_{S3}V_3)/C_BV_1 \leq 2 \times 10^4$

(In the Expressions, $V_1$ is the volume (L) of the reaction mixture in the first continuous stirred tank reactor, $v_1$ is the rate of supply (L/min) of the total amount of styrene, the anionic polymerization initiator, and a solvent added as necessary, which are supplied to the first continuous stirred tank reactor, $V_2$ is the volume (L) of the reaction mixture in the second continuous stirred tank reactor, $v_2$ is the rate of supply (L/min) of the total amount of the conjugated diene and a solvent added as necessary, which are supplied to the second continuous stirred tank reactor, $V_3$ is the volume (L) of the reaction mixture in the third continuous stirred tank reactor, $v_3$ is the rate of supply (L/min) of the total amount of styrene and a solvent added as necessary, which are supplied to the third continuous stirred tank reactor, $C_{S1}$ is the concentration (mol/L) of styrene supplied to the first continuous stirred tank reactor, $C_I$ is the concentration (mol/L) of the conjugated diene supplied to the second continuous stirred tank reactor, $C_{S3}$ is the concentration (mol/L) of styrene supplied to the third continuous stirred tank reactor, and $C_B$ is the concentration (mol/L) of the anionic polymerization initiator supplied to the first continuous stirred tank reactor.)

10. A molding material comprising mainly a hydrogenated styrene-conjugated diene-styrene block copolymer composition containing the hydrogenated styrene-conjugated diene-styrene block copolymer according to any one of Claims 1 to 6.

11. An optical material comprising the molding material according to Claim 10.

12. An optical disk substrate comprising the molding material according to Claim 10.

# *FIG.1*

MOLECULAR WEIGHT (g/mol)

# FIG. 2

# FIG. 3

MOLECULAR WEIGHT (g/mol)

# FIG. 4

MOLECULAR WEIGHT (g/mol)

## INTERNATIONAL SEARCH REPORT

International application No.

PCT/JP02/00459

| A. CLASSIFICATION OF SUBJECT MATTER |
|---|
| Int.Cl⁷ C08F297/02 |

According to International Patent Classification (IPC) or to both national classification and IPC

| B. FIELDS SEARCHED |
|---|
| Minimum documentation searched (classification system followed by classification symbols)<br>Int.Cl⁷ C08F297/02 |
| Documentation searched other than minimum documentation to the extent that such documents are included in the fields searched |
| Electronic data base consulted during the international search (name of data base and, where practicable, search terms used) |

### C. DOCUMENTS CONSIDERED TO BE RELEVANT

| Category* | Citation of document, with indication, where appropriate, of the relevant passages | Relevant to claim No. |
|---|---|---|
| X<br>A | JP, 01-318015, A (Mitsubishi Kasei Corp.),<br>22 December, 1989 (22.12.89),<br>Claims; Example 2<br>Claims; Example 2<br>(Family: none) | 1-6,10-12<br>7-9 |
| X<br>A | JP, 01-294721, A (Mitsubishi Kasei Corp.),<br>28 November, 1989 (28.11.89),<br>Claims; Examples<br>Claims; Examples<br>(Family: none) | 1-2,10-12<br>3-9 |
| X<br>A | JP, 11-286526, A (Nippon Elastomer K.K.),<br>19 October, 1999 (19.10.99),<br>Claims; Par. Nos. [0017], [0018]; Examples<br>Claims; Par. Nos. [0017], [0018]; Examples<br>(Family: none) | 1-2,5-6,10<br>3-4,7-9,11-12 |

| ☒ Further documents are listed in the continuation of Box C. | ☐ See patent family annex. |
|---|---|

| * Special categories of cited documents: | "T" later document published after the international filing date or |
|---|---|
| "A" document defining the general state of the art which is not considered to be of particular relevance | priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search<br>14 March, 2002 (14.03.02) | Date of mailing of the international search report<br>26 March, 2002 (26.03.02) |
|---|---|
| Name and mailing address of the ISA/<br>Japanese Patent Office | Authorized officer |
| Facsimile No. | Telephone No. |

Form PCT/ISA/210 (second sheet) (July 1998)

**EP 1 375 544 A1**

## INTERNATIONAL SEARCH REPORT

| International application No. |
|---|
| PCT/JP02/00459 |

C (Continuation). DOCUMENTS CONSIDERED TO BE RELEVANT

| Category* | Citation of document, with indication, where appropriate, of the relevant passages | Relevant to claim No. |
|---|---|---|
| A | JP, 2000-319484, A (Asahi Chemical Industry Co., Ltd.), 21 November, 2000 (21.11.00), Claims (Family: none) | 1-12 |

Form PCT/ISA/210 (continuation of second sheet) (July 1998)

27